# EUROPÄISCHE PATENTANMELDUNG

(11) **EP 1 849 653 A2**
(43) Veröffentlichungstag der Anmeldung: **31.10.2007**
(21) Anmeldenummer: 07008388.6
(22) Anmeldetag: 25.04.2007
(51) Int. Cl.: B60P 3/34, B60P 1/44

(54) **Überdachung für eine Platfform einer Hubladebühne**

(30) Priorität: 26.04.2006 DE 102006019227
(71) Anmelder: Bär, Gerd, 74078 Heilbronn (DE)
(72) Erfinder: Bär, Gerd, 74078 Heilbronn (DE)
(74) Vertreter: Friz, Oliver

(57) **Zusammenfassung**

Die Erfindung betrifft eine Überdachung (2) für eine Plattform (4) einer Hubladebühne eines Nutzfahrzeugs, die dadurch gekennzeichnet ist, dass sie mittels eines strömbaren Mediums, welches in Stützteile (6) der Überdachung einleitbar ist, aus ihrer Verstaustellung in ihre Betriebsstellung aufrichtbar ist.

## Beschreibung

Die Erfindung betrifft eine Überdachung für eine Plattform einer Hubladebühne eines Nutzfahrzeugs, insbesondere einer in Längsrichtung lang ausladenden Hubladebühne, die an Fahrzeugen für Doppelstockbeladung verwendet wird und daher sehr lange Plattformen, beispielsweise bis zu 3800 mm, haben kann. Des weiteren betrifft die Erfindung eine Hubladebühne mit einer solchen Überdachung.

Hubladebühnen haben in der Regel Plattformen, die den Aufbau des Nutzfahrzeugs in der vertikalen Fahrstellung ganz oder teilweise verschließen. Im ersteren Fall, insbesondere bei Doppelstockfahrzeugen, ist die Plattform, wie vorstehend erwähnt, sehr lang bzw. hoch. Dies bereitet beim Beladen und Entladen vor einer Rampe oder einer Abladestelle Schwierigkeiten, da das Fahrzeug genau platziert werden muss, damit die Plattform der Hubladebühne sowohl über das Rampenniveau gefahren werden kann, um vom Oberdeck Waren auf die Rampe zu transportieren, als auch unter das Rampenniveau gefahren werden kann, um Ware aus dem Unterdeck auf das Rampenniveau hochzutransportieren. Die Beladung erfolgt in gleicher Weise umgekehrt.

Rampen haben üblicherweise Vordächer jedoch nur bis maximal 2,50 m Tiefe, oder sie haben keine Vordächer, wenn es sich z. B. um Verladeschleusen handelt. Dadurch entsteht zwischen dem Fahrzeug und der Rampe ein Bereich, der der Bewitterung - Regen und Schnee - ausgesetzt ist. Von einigen Nutzern wird dies billigend in Kauf genommen. Andere Nutzer wiederum verlangen Plattformen, die lediglich eine Längsabmessung von 2 bis 2,50 m haben, so dass sie von einem vorhandenen Dach einer Rampe überfangen werden. Die Effektivität kurzer Plattformen ist aber für die Be- und Entladearbeit naturgemäß geringer.

Es wurde auch schon der Vorschlag unterbreitet, bei einer langen Plattform eine aufsteckbare mechanische Dachkonstruktion einzusetzen. Diese Lösungen haben sich aber als aufwendig und daher nicht praktikabel erwiesen und fanden keine Akzeptanz. Außerdem besteht die Gefahr, dass solche aufsteckbaren mechanischen Dächer, wenn sie bei der Be- und Entladearbeit touchiert werden, hierdurch beschädigt werden. Auch das Verstauen der Komponenten einer solchen Dachkonstruktion gestaltet sich aufwendig und verbraucht wertvollen Laderaum.

Der vorliegenden Erfindung liegt die Aufgabe zugrunde, eine Überdachung für eine Plattform einer Hubladebühne zu schaffen, die rasch und mit wenig Arbeitsaufwand in eine Betriebsstellung bringbar ist und die ebenso rasch und wenig aufwendig wieder in eine Verstaustellung bringbar ist.

Diese Aufgabe wird erfindungsgemäß dadurch gelöst, dass die Überdachung mittels eines strömbaren Mediums, welches in Stützteile der Überdachung einleitbar ist, aus ihrer Verstaustellung in ihre Betriebsstellung aufrichtbar ist.

Zweckmäßigerweise ist das strömbare Medium gasförmig, wobei es sich hierbei vorzugsweise um Druckluft handelt, die in Nutzfahrzeugen ohnehin verfügbar ist. Es wird also erfindungsgemäß eine "aufblasbare" Überdachung geschaffen. Der hierfür vorzusehende strukturelle Aufbau der Überdachung ist gering. Es brauchen lediglich aufblasbare Stützteile vorgesehen zu werden, die dann mit einem, strömbaren Medium, im Folgenden beispielhaft Druckluft, befüllt werden und so die Überdachung lediglich durch Einströmen der Druckluft,aufrichten. Die Überdachung bietet so einen rasch aufrichtbaren sehr guten Wetterschutz. Der generelle Nachteil großer Plattformen ist damit grundsätzlich eliminiert. Die aufblasbare Überdachung kann zugleich eine Geländerfunktion ausüben, und es können dadurch die Kosten für ein Geländer zusätzlich eingespart werden. Außerdem wird die Zeit zum Aufstellen und Verriegeln einer Geländerkonstruktion eingespart. Dies dauerte nämlich länger als das Aufblasen der Überdachung. Die aufblasbare Überdachung ist überdies sehr viel leichter als eine aufsteckbare mechanische Dachkonstruktion. Hierdurch ergibt sich auch eine höhere Transportökonomie.

Zum Aufblasen der Überdachung kann eine einfache pneumatische Ansteuervorrichtung verwendet werden. Vorzugsweise wird ein zusätzlicher Luftbehälter mit einem Überstromventil zu der schon vorhandenen Druckluftanlage des Nutzfahrzeugs bereitgestellt, was aber nicht zwingend erforderlich ist.

Es erweist sich als vorteilhaft, wenn die Überdachung auf beiden Seiten der Plattform nach unten, vorzugsweise bis wenigstens nahezu an die Plattform reichend, erstreckt ist. Hierdurch kann ein guter Schutz vor Bewitterung erreicht werden. Wenn die Überdachung eine Plane umfasst, so kann die Plane beispielsweise durch Planenanker in einfacher Weise an der Plattform befestigt werden.

Es erweist sich als besonders zweckmäßig, wenn die Überdachung in Fahrt- oder Längsrichtung des Nutzfahrzeugs betrachtet zumindest abschnittsweise bogenförmig ausgebildet ist. Solchenfalls kann Regen zu den Seiten hin ablaufen. Die Überdachung kann insbesondere tunnelförmig ausgebildet sein.

Des Weiteren erweist es sich als vorteilhaft, wenn die Überdachung beidseits im Wesentlichen vertikal erstreckte Abschnitte umfasst. Hierdurch kann eine hinreichende Höhe geschaffen werden, damit die Nutzer möglichst wenig durch die Überdachung behindert ihrer Be- und Entladetätigkeit nachgehen können. An die im Wesentlichen vertikal erstreckten Abschnitte kann sich dann ein bogenförmiger Abschnitt oben anschließen.

Nach einer besonders bevorzugten Ausführungsform der Erfindung umfasst die Überdachung flexible Schlauchabschnitte, in welche das strömbare Medium einleitbar ist. Mehrere solcher flexibler Schlauchabschnitte können entweder unmittelbar oder beispielsweise durch insbesondere gekrümmte oder abgewinkelte Verbindungsstücke miteinander verbunden sein. Bei diesen Verbindungsstücken kann es sich um starre oder halbstarre Elemente handeln. Die flexiblen Schlauchabschnitte können beispielsweise durch Rohrschellen, aber auch in jeder anderen Weise mit solchen Verbindungsstücken verbunden sein. Hierdurch lässt sich in einfacher Weise eine vorbestimmte Form der Überdachung konstruieren, welche die Überdachung beim Einleiten des strömbaren Mediums von selbst automatisch annimmt.

Nach einer weiteren bevorzugten Ausführungsform der Erfindung sind mehrere Stützteile in Fahrt- und Längsrichtung des Nutzfahrzeugs hintereinander und voneinander beabstandet vorgesehen. Der Abstand der Stützteile kann in vorteilhafter Weise 50 cm bis 150 cm, insbesondere 60 bis 100 cm, betragen.

Als besonders vorteilhaft erweist es sich, wenn die erfindungsgemäße Überdachung angrenzend an die Ladeöffnung des Nutzfahrzeugs am Nutzfahrzeug gehalten ist. Dies verleiht der gesamten Dachkonstruktion insbesondere bei Wind eine große Formstabilität. Die Überdachung ist vorzugsweise in einem oberen Bereich an dem Nutzfahrzeug gehalten. Diese lösbare Halteverbindung kann in an sich beliebiger Weise ausgebildet sein. Im einfachsten Fall wird die Überdachung mittels Laschen oder Schlaufen an mitfahrenden Teilen (z. B. Führungswagen) des Doppelstock-Vertikallifts fixiert.

In Weiterbildung dieses Gedankens erweist es sich aber als vorteilhaft, dass die Überdachung beim Aufrichten durch Führungsmittel am Nutzfahrzeug und/oder an der Plattform geführt gehalten ist. Auch diese Führungsmittel können in an sich beliebiger zweckmäßiger Weise ausgebildet sein. Beispielsweise erweist es sich als vorteilhaft, wenn die Führungsmittel vertikale Stangen oder Schienen umfassen, bezüglich derer ein Gleitbewegung der sich aufrichtenden Überdachung ausführbar ist. Beispielsweise kann dies unter Verwendung von Ringen, Ösen, Laschen oder dergleichen zweckmäßig realisiert werden. Die Führungsmittel sind in vorteilhafter Weise lösbar vorgesehen. Sie können beispielsweise auch einenends mit der Plattform und anderenends mit dem Nutzfahrzeug lösbar verbunden sein.

Nach einem weiteren Erfindungsgedanken von besonderer Bedeutung sind bei der erfindungsgemäßen Überdachung Rückspannmittel vorgesehen, welche die Überdachung in ihre Verstaustellung vorspannen. Nach diesem Erfindungsgedanken ist die Überdachung also entgegen einer Vorspannung aufrichtbar, so dass die Rückspannmittel durch das Aufrichten der Überdachung weiter gespannt werden und in der Folge eine Kraft auf die Überdachung ausüben, welche die Überdachung wieder in ihre Verstaustellung bringt, wenndie Druckluft aus der Überdachung bzw. aus den Stützteilen der Überdachung entweichen kann.

Bei den Rückspannmitteln kann es sich grundsätzlich um beliebig komplizierte Einrichtungen handeln. Bei einer besonders einfachen und daher vorteilhaften Ausführungsform umfassen die Rückspannmittel Federn, insbesondere Zugfedern, oder elastisch dehnbare Materialien, die beim Aufrichten der Überdachung gespannt werden und deren Spannkraft dann zum Einfalten der Überdachung nutzbar ist.

Nach einer Ausführungsform der Erfindung sind die Rückspannmittel im Wesentlichen der Erstreckung der Stützteile folgend angeordnet.

Es erweist sich als vorteilhaft, wenn die Rückspannmittel in taschenförmigen Aufnahmen aufgenommen sind.

Wenn die Überdachung eine Plane umfasst, die durch die Stützteile in eine dachartige Gestalt bringbar ist, so kann die Plane mit den taschenförmigen Aufnahmen für die Rückspannmittel verbunden sein, also dahingehend, dass die Rückspannmittel oder deren taschenförmige Aufnahme an vorzugsweise mehreren Stellen mit der Plane verbunden sind und so gewissermaßen über die Plane auf die Stützteile einwirken. Es wäre aber auch denkbar, dass die Rückspannmittel im Wesentlichen direkt auf die Stützteile einwirken.

Um das Einfalten der aufblasbaren Überdachung weitgehend nach einem vorgegebenen optimalen Muster ausführen zu können, erweist es sich als vorteilhaft, wenn die Überdachung Sollknickstellen aufweist, bezüglich derer sich die Überdachung beim Einfalten in die Verstaustellung faltet. Solche Sollknickstellen können wiederum in an sich beliebiger Weise realisiert werden. Beispielsweise wäre es denkbar, bei den Stützteilen Sollbiegestellen oder - abschnitte vorzusehen, deren Biegewiderstand geringer ist als in angrenzenden Bereichen, was beispielsweise durch zwischengeordnete Materialabschnitte realisierbar wäre.

Die Sollknickstellen sind vorzugsweise derart angeordnet, dass beim Einstellen seitliche und in Längsrichtung erstreckte Abschnitte der Überdachung zunächst stehen bleiben und sich ein oberer Bereich der Überdachung dazwischen absenkt. Hierdurch kann eine über die flächenmäßige Erstreckung der Plattform gleichmäßige Bedeckung und eine sehr ökonomische Einfaltung der Überdachung erreicht werden.

Es wäre aber auch denkbar, dass die Sollknickstellen dadurch realisiert oder vorgegeben werden, dass Abschnitte der Überdachung, insbesondere die vorstehend erwähnten seitlichen und in Längsrichtung erstreckten Abschnitte der Überdachung, durch starre Stützelemente zunächst gehalten sind, bis ein oberer Bereich der Überdachung sich dazwischen abgesenkt hat. Dies ist mit dem Vorteil verbunden, dass nicht verschieden starre Materialien bei den mit Druckluft befüllbaren Stützteilen verwendet werden müssen. Geeignete starre Stützelemente können beispielsweise von Stangen oder Blechen gebildet sein, die bezüglich der Plattform einsteckbar bzw. herausziehbar sind oder aus einer Vertikalstellung auf die Plattform klappbar sind. Letzteres kann beispielsweise durch an sich beliebige Scharniermittel erreicht werden.

Solche Stützelemente können auch eine Führungsfunktion beim Aufrichten der Überdachung ausüben. Es kann sich hierbei um die schon erwähnten Führungsmittel handeln.

Das Einfalten der aufblasbaren Überdachung lässt sich nicht nur durch die erwähnten Rückspannmittel, sondern auch durch Evakuieren des strömbaren Mediums aus den Stützteilen unterstützen.

In besonders vorteilhafter Weise ist die Überdachung in einer Fahrposition der Plattform im Wesentlichen unmittelbar bei der Plattform verstaubar, indem sie über die flächenhafte Erstreckung der Plattform möglichst gleichmäßig verteilt auf der Plattform angeordnet ist und mit der Plattform in den Aufbau des Nutzfahrzeugs hineingeklappt wird. Es erweist sich als besonders vorteilhaft, wenn die Überdachung in ihrer Verstaustellung innerhalb eines Volumens von höchstens 20 cm oberhalb der Plattformoberseite untergebracht ist.

Wie vorausgehend erwähnt, kann die Überdachung in vorteilhafter Weise eine Plane umfassen, die dann mit den Stützteilen der Überdachung an vorzugsweise mehreren Stellen vorzugsweise spielbehaftet verbunden ist. Die Plane wird so in bestimmungsgemäßer Position gegenüber den sich selbst aufrichtenden Stützteilen gehalten, und die Form und Gestalt der Überdachung kann hierdurch vorgegeben werden.

Es erweist sich dabei als vorteilhaft, wenn die Plane mit den Stützteilen an mehreren Stellen mittels lösbarer Fixiermittel verbunden sind. Um die Plane rasch gegen eine andere austauschen zu können, erweist es sich als vorteilhaft, wenn die Fixiermittel leicht lösbar sind, also beispielsweise einen Klettverschluss oder einen Druckknopfverschluss umfassen.

Nach einem weiteren Erfindungsgedanken von besonderer Bedeutung ist die aufblasbare Überdachung in einem oberen Bereich, insbesondere in einem Scheitelbereich, in Fahrtoder Längsrichtung des Nutzfahrzeugs kontrahierbar. Hierdurch kann eine Rampe oder Verladeschleuse auch mit aufgerichteter Überdachung angefahren werden bzw. die Plattform insbesondere bei Doppelstockfahrzeugen verfahren werden, ohne dass es zu übermäßiger Reibung zwischen der Überdachung und dem Fahrzeug oder der Verladeeinrichtung kommt, die zu Beschädigungen führen könnte. Hierdurch kann auch eine größtmögliche Regendichtheit realisiert werden, indem die Ladeeinrichtung (Rampe oder Schleuse) im kontrahierten Zustand der Überdachung angefahren wird und dann durch Wegnahme der Kontrahierung ein optimaler Anpressdruck der Überdachung an die Beladeeinrichtung ausgeübt wird.

Hierfür kann die Überdachung in einem oberen Bereich, insbesondere in einem Scheitelbereich, Kontraktionsmittel in Form eines Zug- und/oder Druckzylinders oder eines Flaschenzugs aufweisen. Im einfachsten Fall könnte aber auch ein einfaches Zugmittel, beispielsweise ein Zugriemen, verwendet werden.

Die Erfindung betrifft des weiteren eine Hubladebühne mit einer Plattform und mit einer Überdachung für die Plattform nach einem oder mehreren der Ansprüche 1 - 35. Die Überdachung ist dabei funktionell mit der Hubladebühne und/oder mit dem Nutzfahrzeug verbunden, um von ihrer Verstaustellung in ihre Betriebsstellung und umgekehrt gebracht zu werden.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Überdachung. In der Zeichnung zeigt:
- Figur 1: eine perspektivische Ansicht einer erfindungsgemäßen Überdachung bei einer Plattform einer Hubladebühne in einer aufgeblasenen Betriebsstellung;
- Figur 2: eine Ansicht der Überdachung von hinten;
- Figur 3: eine Seitenansicht der Überdachung;
- Figur 4: die Befestigung einer Plane an einem Stützteil der Überdachung;
- Figur 5: die auf der Plattform liegende Überdachung in ihrer Verstaustellung (schematisch);
- Figur 6: eine schematische Darstellung einer geführt verschieblichen Halterung der Überdachung an der Plattform und
- Figuren 7, 8: Seitenansichten eines Nutzfahrzeugs im Betriebszustand der Überdachung;
- Figuren 8-12: Ansichten einer vorteilhaften Ausführungsform der Anordnung der Überdachung an der Plattform;
- Figuren 12, 13: Ansichten des Einfaltvorgangs der Plattform bei der Ausführungsform nach Figuren 8-12.

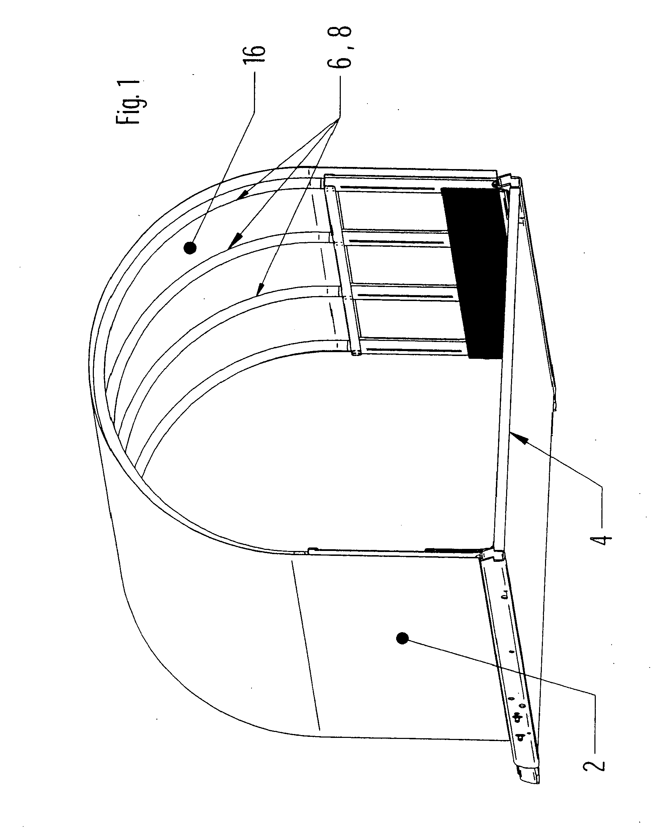

Die Figuren 1 bis 3 zeigen perspektivisch bzw. schematisch eine insgesamt mit dem Bezugszeichen 2 bezeichnete Überdachung einer Plattform 4 einer Hubladebühne bei einem Nutzfahrzeug. Die Überdachung 2 ist aufblasbar ausgebildet, wobei sie Stützteile 6 aus Schlauchabschnitten 8 umfasst, in die Druckluft einleitbar ist und die druckdicht ausgebildet sind, so dass sich die Stützteile, wenn sie pneumatisch mit Luft befüllt werden, in die aus den Figuren ersichtliche vorbestimmte Konfiguration aufrichten, die eine Betriebsstellung der Überdachung 2 bilden.

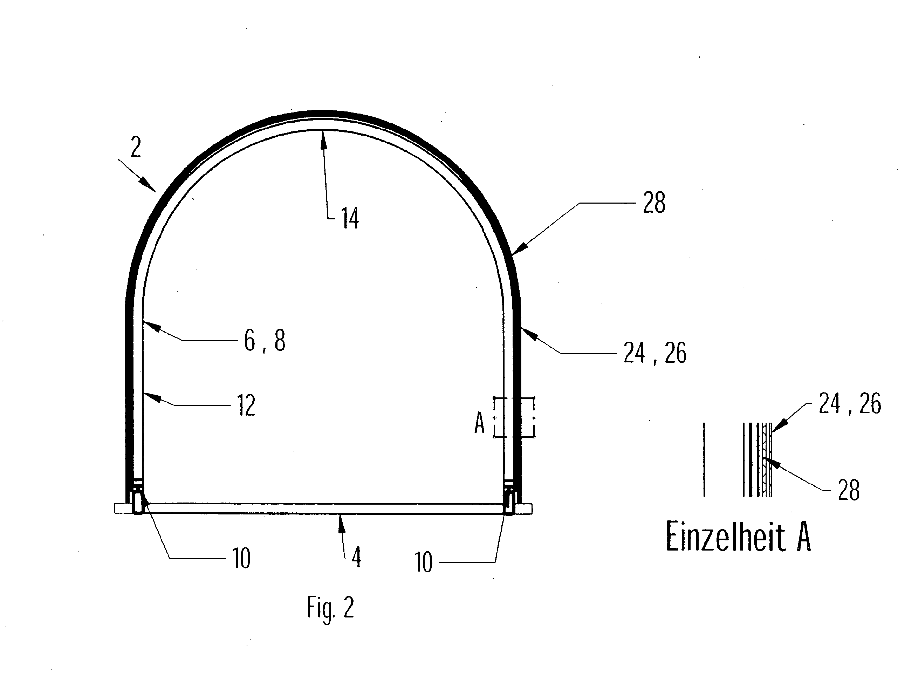

Die befüllbaren und druckdichten Stützteile 6 sind im beispielhaft dargestellten Fall der Figur 2 über einen Stutzen 10 gestülpt und mit an sich beliebigen Mitteln, z. B. Schlauchschellen, druckdicht fixiert. Die jeweiligen Stutzen 10 kommunizieren in nicht dargestellter Weise mit einem pneumatischen Druckluftsystem des Kraftfahrzeugs, welches insbesondere einen zusätzlichen Druckluftbehälter mit einem Überdruckventil umfassen kann, um zu verhindern, dass ein zu hoher Druck an die Stützteile 6 angelegt wird.

Über die Anschlüsse an die Druckluftversorgung und über die Ankopplung der Überdachung an die Plattform und/oder an das Nutzfahrzeug ist die Überdachung funktionell mit der Hubladebühne und/oder mit dem Nutzfahrzeug verbunden, um in nachfolgend zu beschreibender Weise von ihrer Verstaustellung in ihre Betriebsstellung und umgekehrt gebracht zu werden.

In den Figuren 1 bis 3 ist beispielhaft ein jeweiliges Stützteil 6 von einem einzigen durchgehenden Schlauchabschnitt 8 gebildet, der auf den Seiten vertikal erstreckte Abschnitte 12 und oben einen ungefähr halbkreisförmigen Bogen 14 umfasst. Es wäre auch denkbar, dass mehrere Schlauchabschnitte über beliebig geformte, insbesondere gekrümmte oder abgewinkelte Verbindungsstücke, miteinander verbunden werden. Auf diese Weise kann, soweit erwünscht, auch eine abknickende Dachkonstruktion verwirklicht werden.

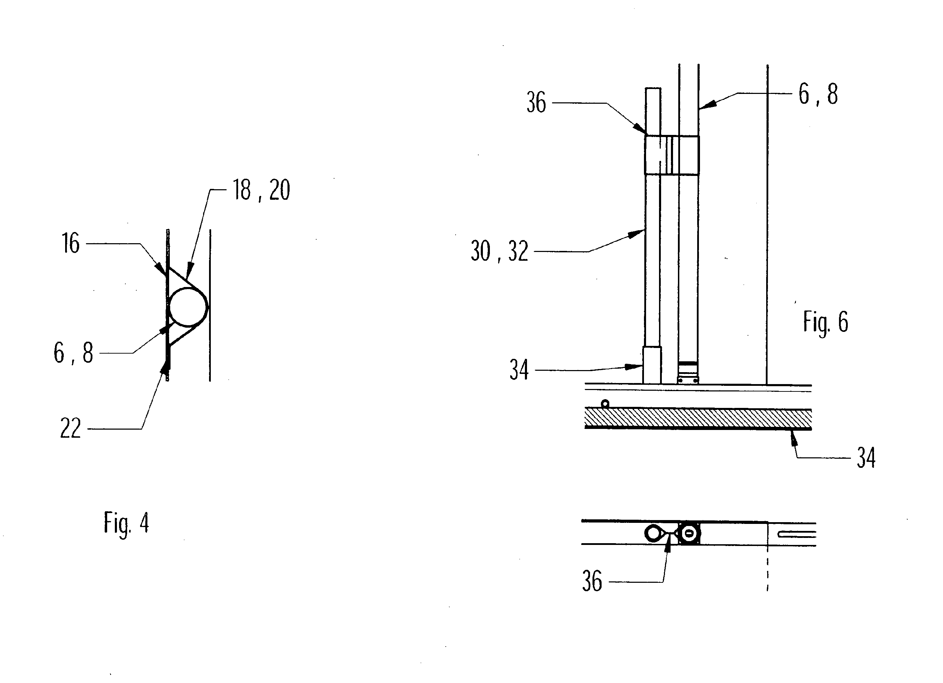

Die Überdachung umfasst des Weiteren eine Plane 16, die über die Stützteile 6 gelegt ist und von diesen in die dargestellte Form gebracht wird. Die Plane 16 ist beispielhaft an einer Vielzahl von Stellen über Fixiermittel 18 lösbar und spielbehaftet mit den Stützteilen 6 verbunden. Dies ist in Figur 4 schematisch dargestellt. Die Fixiermittel 18 umfassen schlaufenförmige Abschnitte 20, die einenends vorzugsweise unlösbar mit der Plane 16 verbunden, insbesondere vernäht, sind und anderenends beispielsweise über einen Druckknopf oder Klettverschluss an der Plane 16 befestigbar sind. Die schlaufenförmigen Abschnitte 20 schließen dann jeweils ein Stützteil 6 zwischen sich und der Plane 16 ein.

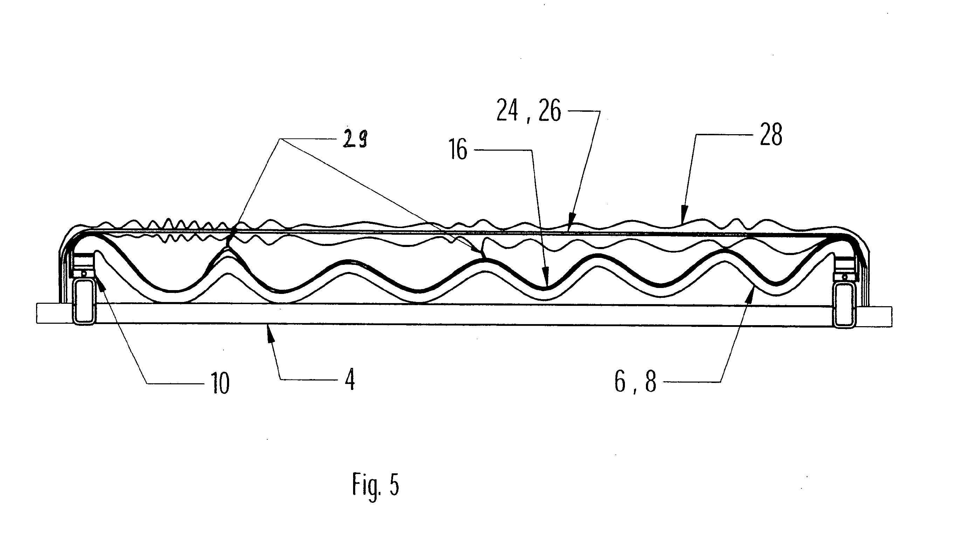

Figur 5 zeigt stark schematisch die Überdachung 2 in ihrer Verstaustellung an der Oberseite der Plattform 4.

Des Weiteren ist in den Figuren 2, 3 und 5 ein Rückspannmittel 24 in Form einer Zugfeder 26 ersichtlich, welches in einer langgestreckten taschenförmigen Aufnahme 28.untergebracht ist. Die taschenförmige Aufnahme 28 mit der Zugfeder 26 ist im beispielhaft dargestellten Fall an der Außenseite der Plane 16 vorgesehen und abschnittsweise an Stellen 29 an der Plane 16 fixiert. Das Rückspannmittel ist dabei im Wesentlichen entlang der Erstreckung der Stützteile 6, also der generellen Bogenform folgend, angeordnet. Wenn Druckluft in die Stützteile 6 eingeleitet wird und sich die Überdachung dadurch in ihre in den Figuren 1 bis 3 dargestellte Betriebsstellung aufrichtet, so wird die Zugfeder 26 gespannt. Wenn anschließend die Überdachung wieder in ihre Verstaustellung gebracht wird, indem die Druckluft aus den Stützteilen 6 entweichen kann, so unterstützt die Zugfeder 26 das Einfalten der Überdachung 2, indem sie bestrebt ist, die in Figur 5 dargestellte Position einzunehmen.

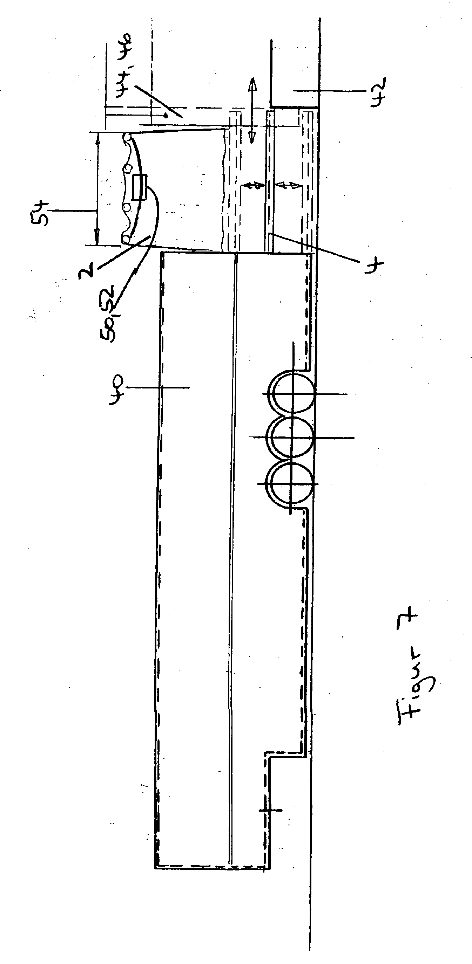

Figur 6 zeigt, dass die Überdachung 2 zusätzlich über Führungsmittel 30, im beispielhaft dargestellten Fall in Form einer vertikalen Stange 32, beim Aufrichten geführt gehalten ist. Die vertikale Stange 32 ist in eine an der Plattform 4 befestigte Einsteckhülse 34 eingesteckt und erstreckt sich über wenigstens die halbe Höhe der Überdachung 2 nach oben. Es wäre auch denkbar, dass das Führungsmittel 30 an beweglichen Liftteilen befestigt oder zur Stabilisierung mit diesen verbindbar ist. Dieses Führungsmittel 30 ist im beispielhaft dargestellten Fall über eine an dem Führungsmittel 30 verschiebliche Schlaufe 36 mit der Überdachung 2, d. h. vorzugsweise mit einem Stützteil 6 oder mit der Plane 16 der Überdachung 2, verbunden. Hierdurch wird die Überdachung 2 beim Aufrichten durch das Führungsmittel 30 gehalten und geführt. Ein solches Führungsmittel 30 ist vorteilhafterweise an beiden Seiten der Plattform und vorzugsweise sowohl am freien Plattformende als auch am nutzfahrzeugseitigen Ende vorgesehen. Zusätzliche Führungsmittel können dazwischen vorgesehen sein. Hierdurch kann eine optimale Formstabilität und eine Optimierung des Aufrichtvorgangs der Überdachung sichergestellt werden.

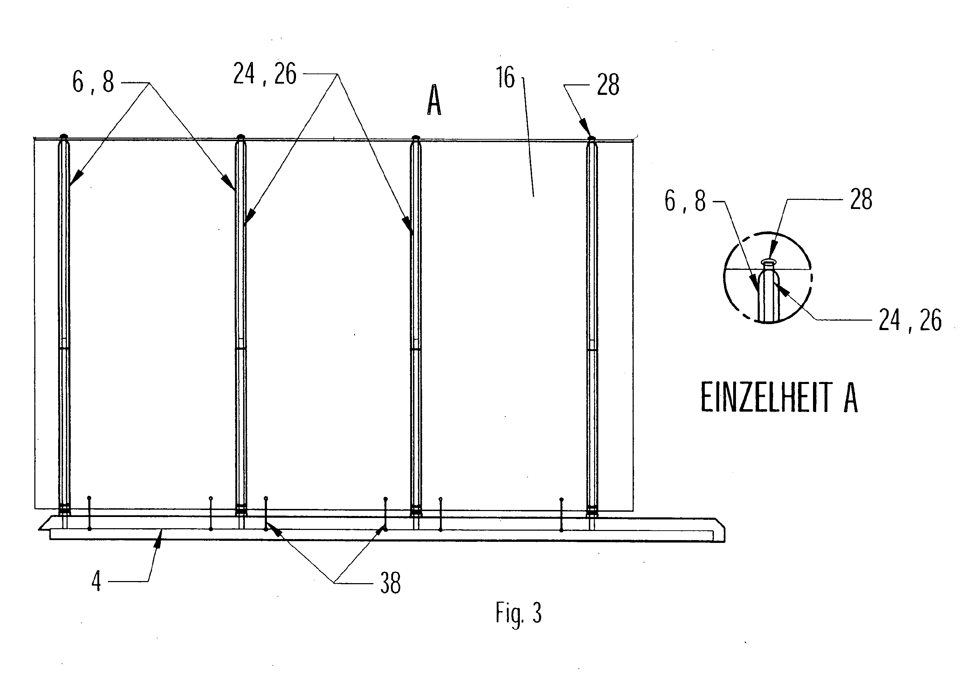

Im dargestellten Ausführungsbeispiel wird die gesamte Überdachung 2 durch vier Stützteile 6 und eine darüber liegende Plane 16 gebildet, wobei die Plane 16 links und rechts kurz oberhalb der Plattform 4 endet. Die Plane 16 wird mittels Planenanker 38 (Figur 3) an der Plattform 4 befestigt. Dies dient zum einen der Fixierung der Plane 16 und zum anderen der Bereitstellung einer Fangnetzfunktion für eine verunfallte Person. Die Befestigung der Plane 16 an der Plattform 4 und die Länge der Stützteile 6 bzw. des hierdurch gebildeten Stützschlauchbogens ist so gewählt, dass die Plane 16 in der Betriebsstellung der Überdachung 2 durch die Stützschlauchbogen gut gespannt ist und damit eine hohe Eigenstabilität aufweist.

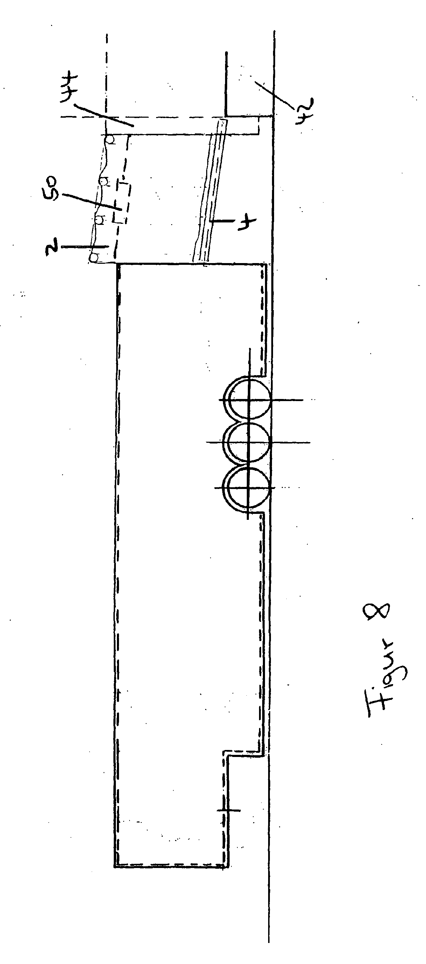

Figur 7 zeigt ein Doppelstocknutzfahrzeug 40, welches mit seiner Plattform 4 eine schematisch angedeutete Laderampe 42 mit einer etwas vorgelagerten Schleuseneinrichtung 44 mit Gummilappen 46 anfährt (gestrichelt dargestellt sind andere Stellungen der Plattform 4 auf Höhe des Oberdecks und des Unterdecks).

Man erkennt des Weiteren die erfindungsgemäße Überdachung 2, die in diesem Fall kontrahierbar ausgebildet ist, insbesondere um die Plattform 4 unbehindert heben und senken zu können. Sie umfasst in einem oberen Scheitelbereich 48 ein Kontraktionsmittel 50, beispielsweise in Form eines Zug- oder Druckzylinders 52, mittels dessen die Überdachung oben in der Längsrichtung 54 zusammenziehbar ist, um nicht mit der Schleuseneinrichtung 44 zu kollidieren. Auf diese Weise lässt sich die Rampe 42 im kontrahierten Zustand der Überdachung besser anfahren, und wenn die Plattform im kontrahierten Zustand der Überdachung angehoben oder abgesenkt wird, so wird eine übermäßige Reibung mit der Schleuseneinrichtung 44 vermieden. Dennoch kann eine hohe Regendichtheit erreicht werden, wenn das Kontraktionsmittel 50 so angesteuert wird, dass die Überdachung unter Eigenspannung oder unter Vorspannung, der beispielsweise durch das Kontraktionsmittel erzeugt werden kann, gegen die Schleuseneinrichtung 44 anliegt.

Es erweist sich hierbei als vorteilhaft, wenn die Steuerung so ausgebildet ist, dass beim Heben und Senken der Plattform automatisch das Kontraktionsmittel derart angesteuert wird, dass die Überdachung im oberen Bereich kontrahiert.

Dieses Prinzip erweist sich als besonders vorteilhaft, wenn die Hubladebühne bzw. die Plattform 4, wie in Figur 8 dargestellt, als schiefe Ebene zur Rampe 42 benutzt wird. Durch Kontrahieren und anschließendes Entlüften des Kontraktionsmittels 50 ist die in Figur 8 dargestellte Anordnung von Plattform 4 und Überdachung 2 bezüglich der Rampe 42 und der Schleuseneinrichtung 44 überhaupt erst möglich.

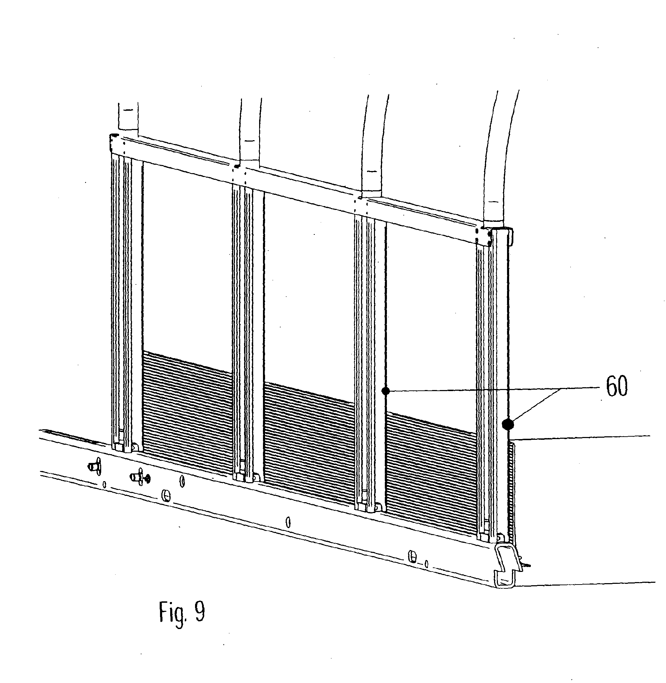

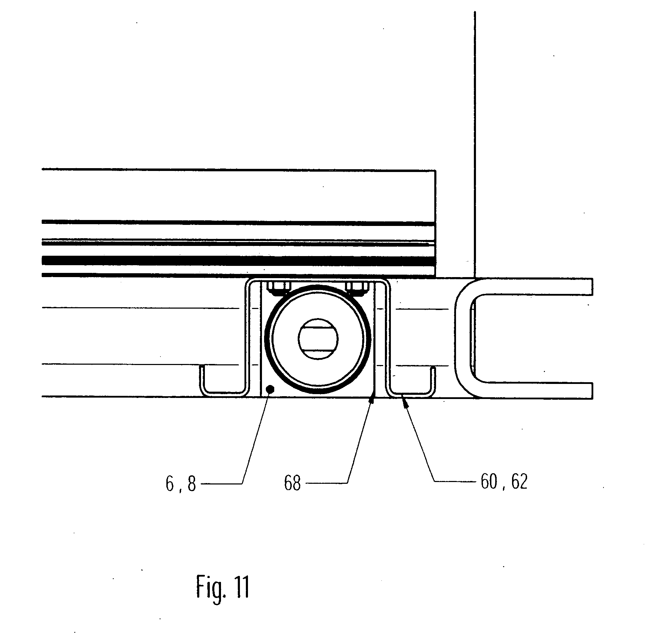

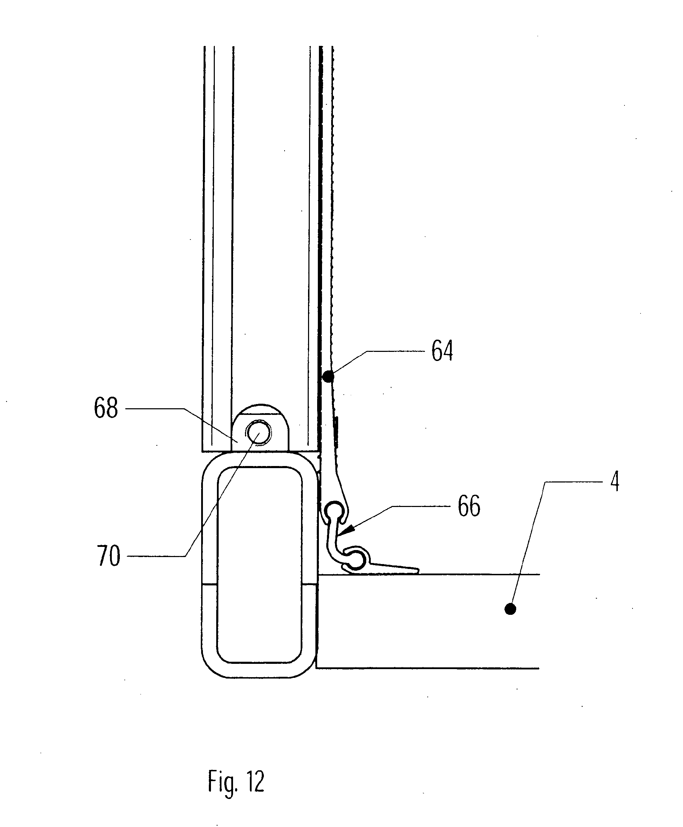

Die Figuren 9 bis 12 zeigen Ansichten einer weiteren vorteilhaften Ausführungsform der Erfindung. Danach sind links und rechts der Plattform 4 aufrichtbare bzw. abklappbare starre Stützelemente 60 vorgesehen, die im Querschnitt ein im Wesentlichen hutförmiges Profil 62 umfassen (Figur 11). Die Stützelemente 60 erstrecken sich parallel zueinander und sind im beispielhaft dargestellten Fall im unteren Bereich über ein langgestrecktes Strangpressprofil 64 miteinander verbunden. Das Strangpressprofil 64 ist, wie aus Figur 12 ersichtlich, über eine Gummiknebelverbindung 66 mit der Oberseite der Plattform 4 abklappbar verbunden. Es könnte hier aber auch jede andere klappbare Verbindung vorgesehen werden.

Ein jeweiliges Stützelement 60 hält ein Endstück 68, welches zugleich einen druckdichten Abschluss eines mit Druckluft befüllbaren Stützteils 6 bzw. Schlauchabschnitts 8 bildet. Das Endstück 68 bildet auch einen Druckluftanschluss 70 (Figuren 11, 12). Ein jeweiliges Stützteil 6 erstreckt sich dann entlang des Stützelements 60 und wird hierdurch in der Betriebsstellung in der vertikalen Position gehalten oder stabilisiert.

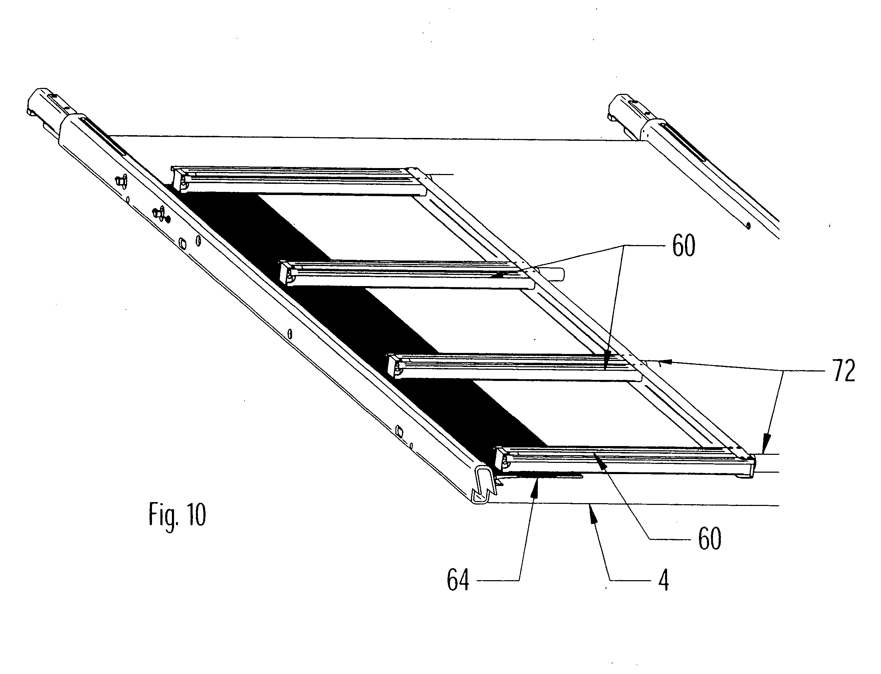

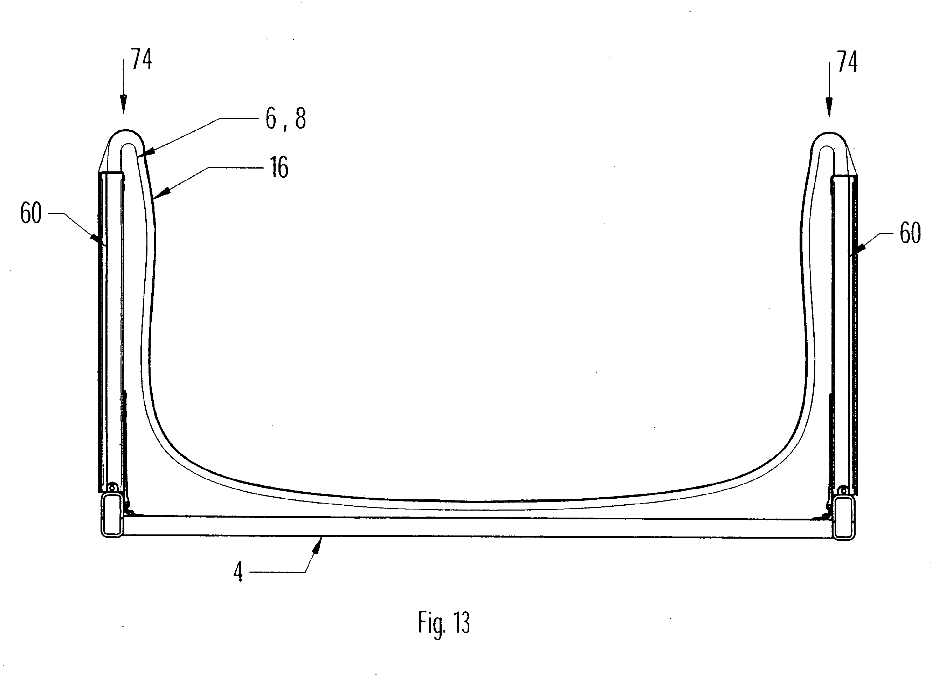

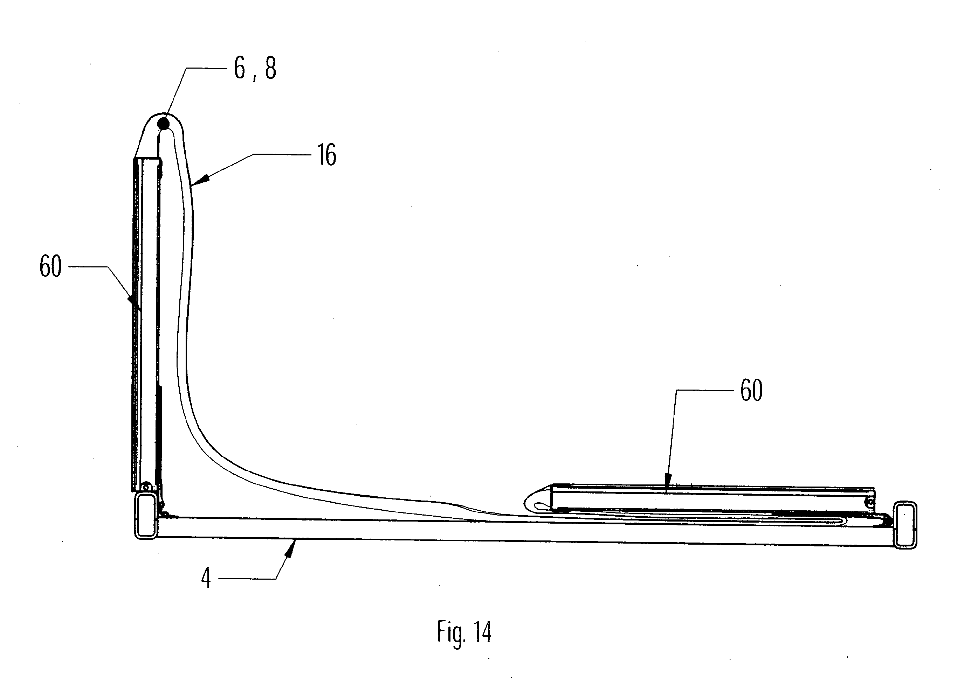

Im Bereich des freien Endes 72 der Stützelemente 60 werden Sollknickstellen 74 für die mit Druckluft befüllbaren Stützteile 6 geschaffen. Dies bedeutet, dass beim Einfalten der Überdachung 2 in ihre Verstaustellung sich zunächst der obere Bereich der Überdachung 2 in den Raum zwischen den starren Stützelementen 60 absenkt. Danach werden die starren Stützelemente 60 und mit ihnen die betreffenden Schlauchabschnitte in die aus Figur 10 ersichtliche Konfiguration eingeklappt. Auf diese Weise wird eine gleichmäßige Einfaltung reproduzierbar unterstützt. Dies ist aus Figuren 13 und 14 ersichtlich.

## Patentansprüche

1. Überdachung (2) für eine Plattform (4) einer Hubladebühne eines Nutzfahrzeugs, wobei die Plattform (4) mittels eines Hubwerks aus einer vertikalen Fahrstellung in eine horizontale Beladestellung bringbar und außerdem heb- und senkbar ist, **dadurch gekennzeichnet, dass** die Überdachung (2) mittels eines strömbaren Mediums, welches in Stützteile (6) der Überdachung einleitbar ist, aus ihrer Verstaustellung in ihre Betriebsstellung aufrichtbar ist.

2. Überdachung nach Anspruch 1, **dadurch gekennzeichnet, dass** das strömbare Medium gasförmig ist.

3. Überdachung nach Anspruch 2, **dadurch gekennzeichnet, dass** das strömbare Medium Druckluft ist.

4. Überdachung nach Anspruch 1, 2 oder 3, **dadurch gekennzeichnet, dass** sie auf beiden Seiten in Richtung auf die Plattform (4) nach unten erstreckt ist.

5. Überdachung nach einem der vorstehenden Ansprüche, **dadurch gekennzeichnet, dass** sie auf beiden Seiten bis wenigstens nahezu an die Plattform (4) reichend erstreckt ist.

6. Überdachung nach einem oder mehreren der vorstehenden Ansprüche, **dadurch gekennzeichnet, dass** die Überdachung in Fahrt- oder Längsrichtung des Nutzfahrzeugs betrachtet zumindest abschnittsweise bogenförmig ausgebildet ist.

7. Überdachung nach einem oder mehreren der vorstehenden Ansprüche, **dadurch gekennzeichnet, dass** sie tunnelförmig ausgebildet ist.

8. Überdachung nach einem oder mehreren der vorstehenden Ansprüche, **dadurch gekennzeichnet, dass** sie beidseits im wesentlichen vertikal erstreckte Abschnitte (12) umfasst.

9. Überdachung nach einem oder mehreren der vorstehenden Ansprüche, **dadurch gekennzeichnet, dass** die Überdachung flexible Schlauchabschnitte (8) umfasst, in welche das strömbare Medium einleitbar ist.

10. Überdachung nach Anspruch 9, **dadurch gekennzeichnet, dass** flexible Schlauchabschnitte (8) durch insbesondere gekrümmte Verbindungsstücke miteinander verbunden sind.

11. Überdachung nach einem oder mehreren der vorstehenden Ansprüche, **dadurch gekennzeichnet, dass** sie beidseits an wenigstens einen, vorzugsweise an mehrere Anschlussstutzen (10), die an der Plattform (4) vorgesehen sind, angeschlossen ist.

12. Überdachung nach einem oder mehreren der vorstehenden Ansprüche, **dadurch gekennzeichnet, dass** mehrere Stützteile (6) in Fahrt- oder Längsrichtung des Nutzfahrzeugs hintereinander und voneinander beabstandet vorgesehen sind.

13. Überdachung nach Anspruch 12, **dadurch gekennzeichnet, dass** der Abstand der Stützteile (6) 60 cm - 100 cm beträgt.

14. Überdachung nach einem oder mehreren der vorstehenden Ansprüche, **dadurch gekennzeichnet, dass** sie angrenzend an die Ladeöffnung des Nutzfahrzeugs am Nutzfahrzeug gehalten ist.

15. Überdachung nach einem oder mehreren der vorstehenden Ansprüche, **dadurch gekennzeichnet, dass** sie beim Aufrichten durch Führungsmittel (30) am Nutzfahrzeug und/oder an der Plattform (4) geführt gehalten ist.

16. Überdachung nach Anspruch 15, **dadurch gekennzeichnet, dass** die Führungsmittel (30) vertikale Stangen (32) oder Schienen umfassen, bezüglich derer eine Gleitbewegung ausführbar ist.

17. Überdachung nach Anspruch 15 oder 16, **dadurch gekennzeichnet, dass** die Führungsmittel (30) lösbar sind.

18. Überdachung nach einem oder mehreren der vorstehenden Ansprüche, **gekennzeichnet durch** Rückspannmittel (24), welche die Überdachung in ihre Verstaustellung vorspannen.

19. Überdachung nach Anspruch 18, **dadurch gekennzeichnet, dass** die Rückspannmittel (24) Federn, insbesondere Zugfedern (26), oder elastisch dehnbare Materialien umfassen, die beim Aufrichten gespannt werden.

20. Überdachung nach Anspruch 18 oder 19, **dadurch gekennzeichnet, dass** die Rückspannmittel (24) im wesentlichen der Erstreckung der Stützteile (6) folgend erstreckt sind.

21. Überdachung nach Anspruch 18, 19 oder 20, **dadurch gekennzeichnet, dass** die Rückspannmittel (30) in taschenförmigen Aufnahmen (28) aufgenommen sind.

22. Überdachung nach einem oder mehreren der vorstehenden Ansprüche, **dadurch gekennzeichnet, dass** sie eine Plane (16) umfasst, die durch die Stützteile (6) in eine dachartige Gestalt bringbar ist.

23. Überdachung nach einem der Ansprüche 18 -.22, **dadurch gekennzeichnet, dass** die Plane (16) mit den taschenförmigen Aufnahmen (28) für die Rückspannmittel (30) verbunden ist.

24. Überdachung nach einem oder mehreren der vorstehenden Ansprüche, **dadurch gekennzeichnet, dass** sie Sollknickstellen (74) aufweist, bezüglich derer sich die Überdachung beim Einfalten in die Verstaustellung faltet.

25. Überdachung nach Anspruch 24, **dadurch gekennzeichnet, dass** die Sollknickstellen (74) derart angeordnet sind, dass seitliche Abschnitte der Überdachung zunächst stehen bleiben und sich ein oberer Bereich der Überdachung dazwischen absenkt.

26. Überdachung nach einem oder mehreren der vorstehenden Ansprüche, **dadurch gekennzeichnet, dass** die seitlichen Abschnitte der Überdachung durch starre Stützelemente (60) gehalten sind.

27. Überdachung nach Anspruch 26, **dadurch gekennzeichnet, dass** die starren Stützelemente (60) bezüglich der Plattform (4) einsteckbar bzw. herausziehbar oder aus einer Vertikalstellung auf die Plattform (4) klappbar sind.

28. Überdachung nach einem oder mehreren der vorstehenden Ansprüche, **dadurch gekennzeichnet, dass** das Einfalten durch Evakuieren des strömbaren Mediums aus den Stützteilen (6) unterstützbar ist.

29. Überdachung nach einem oder mehreren der vorstehenden Ansprüche, **dadurch gekennzeichnet, dass** sie in einer Fahrposition der Plattform (4) bei der Plattform (4) verstaubar ist.

30. Überdachung nach Anspruch 29, **dadurch gekennzeichnet, dass** sie in ihrer Verstaustellung innerhalb eines Volumens von höchstens 20 cm oberhalb der Plattformoberseite untergebracht ist.

31. Überdachung nach einem oder mehreren der vorstehenden Ansprüche, **dadurch gekennzeichnet, dass** die Plane (16) mit den Stützteilen (6) an mehreren Stellen spielbehaftet verbunden ist.

32. Überdachung nach Anspruch 31, **dadurch gekennzeichnet, dass** die Plane (16) mit den Stützteilen (6) an mehreren Stellen mittels lösbarer Fixiermittel (18) verbunden ist.

33. Überdachung nach Anspruch 32, **dadurch gekennzeichnet, dass** die Fixiermittel (18) einen Klettverschluss oder einen Druckknopfverschluss umfassen.

34. Überdachung nach einem oder mehreren der vorstehenden Ansprüche, **dadurch gekennzeichnet, dass** sie in einem oberen Bereich, insbesondere in einem Scheitelbereich, in Fahrt- oder Längsrichtung des Nutzfahrzeugs kontrahierbar ist.

35. Überdachung nach Anspruch 34, **dadurch gekennzeichnet, dass** sie in einem oberen Bereich, insbesondere in einem Scheitelbereich, Kontraktionsmittel (50) in Form eines Zug- oder Druckzylinders (52) oder eines Flaschenzugs aufweist.

36. Hubladebühne für ein Nutzfahrzeug, insbesondere für einen Lastkraftwagen oder ein Doppelstockfahrzeug, mit einer Plattform (4) und einem Hubwerk für die Plattform (4), mittels dessen die Plattform (4) aus einer vertikalen Fahrstellung in eine horizontale Beladestellung bringbar und außerdem heb- und senkbar ist, **gekennzeichnet durch** eine Abdeckung nach einem oder mehreren der vorstehenden Ansprüche.
